# EUROPÄISCHE PATENTSCHRIFT

(11) **EP 2 138 426 B1**
(45) Veröffentlichungstag und Bekanntmachung des Hinweises auf die Patenterteilung: **08.05.2013**
(21) Anmeldenummer: 09154428.8
(22) Anmeldetag: 05.03.2009
(51) Int. Cl.: B65D 90/26, B65D 88/02

(54) **Überfüllsicherungsvorrichtung für Behälterbatterien**
Overload safety device for container batteries
Dispositif de sécurité de trop-plein pour batteries de récipients

(30) Priorität: 01.10.2008 DE 202008013084 U; 23.06.2008 DE 202008008309 U
(43) Veröffentlichungstag der Anmeldung: 30.12.2009
(73) Patentinhaber: AFRISO-EURO-INDEX GmbH, 74363 Güglingen (DE)
(72) Erfinder: Aldinger, Ulrich, 70192 Stuttgart (DE)
(74) Vertreter: Kohler Schmid Möbus

(56) Entgegenhaltungen:
- DE-A1- 10 134 485
- DE-B- 1 268 549
- US-A- 3 618 643
- US-A- 5 515 890

## Beschreibung

Die vorliegende Erfindung betrifft eine Überfüllsicherungsvorrichtung für Flüssigkeitsbehälterbatterien, insbesondere Tankbatterien für Heizöl, aus mehreren Behältern mit einem Kaltleiter als elektrischem Grenzwertgeber für eine Befüllungssteuerung, die das Befüllen der Behälter steuert. US 3 618 643 und US 5 515 890 offenbaren ähnliche Vorrichtungen.

Um das Überfüllen von Tanks, wie z.B. Heizöltanks, mit wassergefährdenden Flüssigkeiten zu verhindern, werden für solche Tanks Überfüllsicherungen vorgeschrieben. Bei einem Heizöltank wird dazu im Tankinneren ein Grenzwertgeber in Form eines Kaltleiters montiert, der in seiner Einbauhöhe so eingestellt wird, dass es selbst unter schlechtesten Bedingungen nie zu einer Überfüllung (z.B. durch Nachlaufen von Öl aus dem Befüllschlauch, Temperaturschwankungen, etc.) kommen kann.

Der Heizöl liefernde Lkw-Fahrer verbindet zur Befüllung seinen Lkw mit dem Heizöltank durch einen Schlauch und durch ein elektrisches Kabel, welches den Kaltleiter mit einem Schaltverstärker des Lkws verbindet. Über den Schaltverstärker wird eine elektrische Spannung an den Kaltleiter angelegt und dieser dadurch erwärmt. Der Befüllvorgang wird durch den Schaltverstärker nur freigegeben, wenn der Schaltverstärker mit dem Kaltleiter verbunden ist und der Kaltleiter nicht in Heizöl eingetaucht ist, also weiterhin erwärmt ist. Der Befüllvorgang wird durch den Lkw-Fahrer gestartet und sofort automatisch durch den Schaltverstärker beendet, wenn der Kaltleiter in Heizöl eintaucht und dadurch abgekühlt wird oder wenn die Kabelverbindung vom Kaltleiter zum Schaltverstärker unterbrochen wird. Bei mehreren Tanks einer Tankbatterie wird der Kaltleiter immer in den ersten Tank montiert, während die anderen Tanks nicht überwacht werden.

Demgegenüber ist es die Aufgabe der vorliegenden Erfindung, bei einer Überfüllsicherungsvorrichtung der eingangs genannten Art auch die weiteren Behälter der Behälterbatterie auf Überfüllung zu überwachen.

Diese Aufgabe wird erfindungsgemäß gelöst durch eine Überfüllsicherungsvorrichtung für Flüssigkeitsbehälterbatterien gemäß Anspruch 1, wobei in einem ersten Behälter auf einer zulässigen Füllstandshöhe entweder der Kaltleiter (erste Variante) oder ein elektrischer Schwimmschalter (zweite Variante) vorgesehen ist, wobei in jedem weiteren Behälter auf einer zulässigen Füllstandshöhe ein elektrischer Schwimmschalter vorgesehen ist, und wobei die Schwimmschalter mit dem Kaltleiter seriell oder parallel verschaltet sind. Bevorzugt ist jeder Schwimmschalter bei serieller Verschaltung in der unteren Ausgangsposition seines Schwimmers geschlossen und in einer aufgeschwommenen oberen Position seines Schwimmers geöffnet und bei paralleler Verschaltung in der unteren Ausgangsposition seines Schwimmers geöffnet und in einer aufgeschwommenen oberen Position seines Schwimmers geschlossen.

Bei einer ersten Variante wird, wenn beim Befüllen die Füllstandshöhe das Maximum im ersten Behälter überschreitet, der Befüllvorgang durch den nun abgekühlten Kaltleiter beendet. Im Fall der seriellen Verschaltung unterbricht, wenn beim Befüllen die Füllstandshöhe das Maximum in einem der weiteren Behälter überschreitet, der zugehörige Schwimmerschalter aufgrund der seriellen Verschaltung die elektrische Verbindung zwischen Kaltleiter und Befüllungssteuerung, und der Befüllvorgang wird ebenfalls beendet. Im Fall der parallelen Verschaltung schließt, wenn beim Befüllen die Füllstandshöhe das Maximum in einem der weiteren Behälter überschreitet, der zugehörige Schwimmerschalter, was aufgrund der parallelen Verschaltung zu einem Kurzschluss der am Kaltleiter angelegten elektrischen Spannung führt. Dieser Kurzschluss wird von der Befüllungssteuerung als Fehler erkannt, und der Befüllvorgang wird ebenfalls wie oben beschrieben beendet. Durch die Seriell- bzw. Parallelschaltung funktioniert dieses Prinzip mit beliebig vielen Behältern.

Bei einer zweiten Variante wird, wenn beim Befüllen die Füllstandshöhe das Maximum im ersten Behälter überschreitet, der Befüllvorgang durch den im ersten Behälter vorgesehenen Schwimmerschalter beendet, der aufgrund seiner seriellen oder parallelen Verschaltung die elektrische Verbindung zwischen Kaltleiter und Befüllungssteuerung unterbricht. Der Kaltleiter dient bei dieser Variante also nicht zur Füllstandsmessung, sondern ist vorgesehen, um dem Schaltverstärker des Lkws die weiterhin geforderte Kaltleiter-Charakteristik bereitzustellen.

Bei einer anderen ganz besonders bevorzugten Ausführungsform sind die Behälter parallel an eine zentrale Befüllungsleitung angeschlossen, und zwar vorteilhaft jeweils über identische Drosseln, um ein gleichmäßiges Befüllen der einzelnen Behälter zu erreichen.

Die Offenbarung betrifft in einem zweiten Aspekt auch eine Überfüllsicherungsvorrichtung für einen einzigen Behälter, insbesondere für Heizöl, mit einem Kaltleiter als elektrischem Grenzwertgeber für eine Befüllungssteuerung, die das Befüllen des Behälters steuert, wobei in dem Behälter auf einer zulässigen Füllstandshöhe ein elektrischer Schwimmschalter vorgesehen ist, der mit dem Kaltleiter seriell oder parallel verschaltet ist.

Besonders bevorzugt ist der Schwimmschalter als Reedkontaktschalter ausgebildet und weist der Schwimmer einen mit dem Reedkontakt zusammenwirkenden Magneten auf.

In vorteilhafter Ausführung ist der Schwimmschalter - wie üblicherweise auch der Kaltleiter - an einem von oben in den Behälter ragenden Sondenrohr vorgesehen.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen Überfüllsicherungsvorrichtung für eine Heizöl-Tankbatterie;
- Fig. 2: beispielhaft den Aufbau eines in Fig. 1 gezeigten Schwimmschalters;
- Fig. 3: eine zweite Ausführungsform der erfindungsgemäßen Überfüllsicherungsvorrichtung für eine Heizöl-Tankbatterie;
- Fig. 4: eine dritte Ausführungsform der erfindungsgemäßen Überfüllsicherungsvorrichtung für eine Heizöl-Tankbatterie; und
- Fig. 5: eine weitere Ausführungsform einer Überfüllsicherungsvorrichtung für eine Heizöl-Tankbatterie.

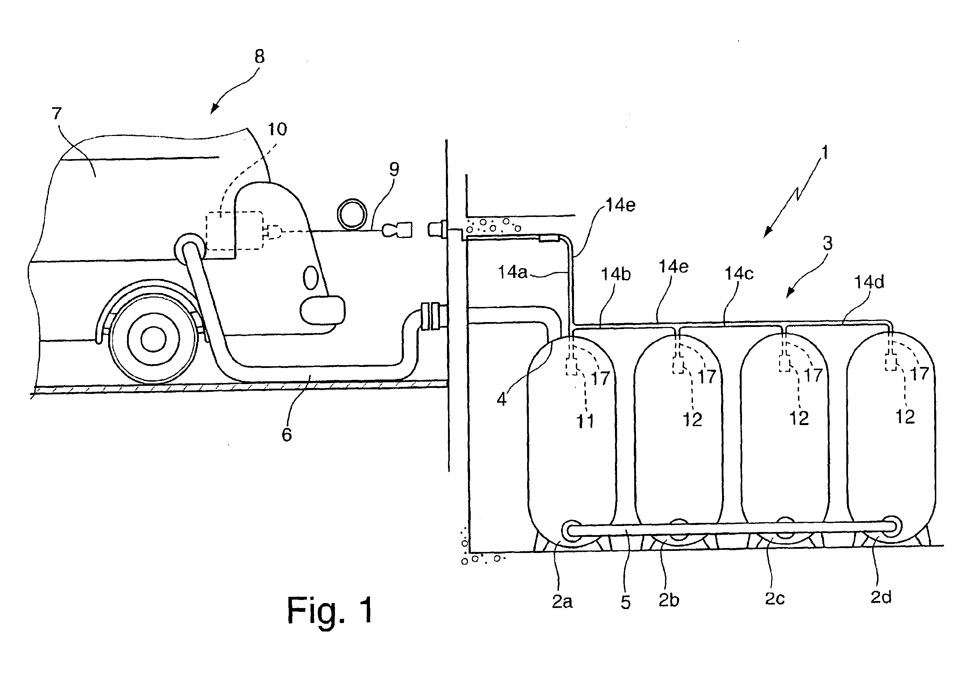

Die in **Fig. 1** insgesamt mit **1** bezeichnete Überfüllsicherungsvorrichtung dient zur Füllstandsüberwachung von vier doppelwandigen Behältern **2a-2d** einer hier beispielhaft oberirdischen Behälterbatterie **3.** Nur der in Fig. 1 linke, erste Behälter 2a ist über eine Befüllöffnung **4** von außen befüllbar, während die weiteren Behälter 2b-2d über eine oder mehrere Verbindungsleitungen **5** parallel oder in Reihe mit dem ersten Behälter 2a kommunizierend verbunden sind und somit über den ersten Behälter 2a befüllt werden.

Der Heizöl liefernde Lkw-Fahrer verbindet einerseits durch einen Schlauch **6** den Heizöltank **7** seines Lkws **8** mit der Befüllöffnung **4** des ersten Behälter 2a und andererseits durch ein elektrisches Kabel 9 eine die Befüllung steuernde Befüllungssteuerung (z.B. Schaltverstärker) **10** des Lkws **8** mit einem als Kaltleiter **11** ausgebildeten elektrischen Grenzwertgeber, der im Tankinneren des ersten Behälter 2a montiert ist. Der Kaltleiter 11 ist im ersten Behälter 2a in seiner Einbauhöhe so eingestellt, dass es selbst unter schlechtesten Bedingungen nie zu einer Überfüllung des ersten Behälters 2a (z.B. durch Nachlaufen von Öl aus dem Befüllschlauch, Temperaturschwankungen, etc.) kommen kann.

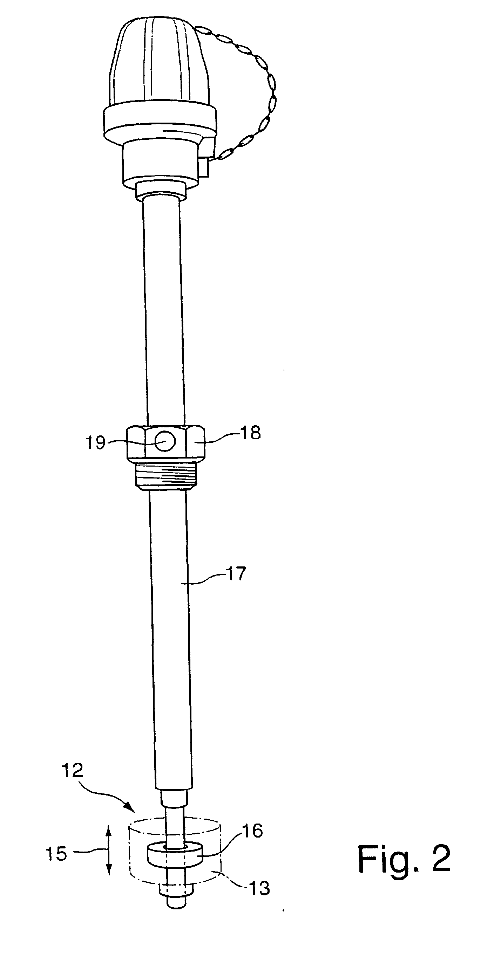

In jedem der weiteren Behälter 2b-2d ist ein elektrischer Schwimmschalter **12** vorgesehen, der in der unteren Ausgangsposition seines Schwimmers **13** (Fig. 2) geschlossen und in einer aufgeschwommenen oberen Position seines Schwimmers 13 geöffnet ist. Die Schwimmschalter 12 sind mit dem Kaltleiter 11 des ersten Behälters 2a elektrisch in Serie verschaltet, wie durch die elektrischen Leitungen **14a-14e** gezeigt ist, und in gleicher Einbauhöhe wie der Kaltleiters 11 montiert. Ist der Schwimmer 13 in seiner unteren Position (d.h. kein Heizöl vorhanden), ist der Schwimmschalter 12 geschlossen. Ist der Schwimmer 13 in seiner aufgeschwommenen oberen Position (d.h. in Heizöl eingetaucht), ist der Schwimmschalter 12 geöffnet.

Überschreitet beim Befüllen der Heizölpegel sein Maximum im ersten Behälter 2a, wird der Befüllvorgang wie oben beschrieben durch den abgekühlten Kaltleiter 11 beendet. Überschreitet beim Befüllen der Heizölpegel sein Maximum in einem der weiteren Behälter 2b-2d, unterbricht der zugehörige Schwimmerschalter 12 aufgrund der seriellen Verschaltung die elektrische Verbindung zwischen Kaltleiter 11 und Befüllungssteuerung 10, und der Befüllvorgang wird ebenfalls wie oben beschrieben beendet. Durch die Seriellschaltung funktioniert dieses Prinzip mit beliebig vielen Behältern.

Eine bevorzugte Ausführung des Schwimmschalters 12 ist in **Fig. 2** gezeigt. Der Schwimmschalter 12 ist als Reedkontaktschalter und der Schwimmer 13 als ein verschiebbar (Doppelpfeil **15**) zum Reedkontakt (nicht gezeigt) geführter Kunststoffschwimmer mit einem Ringmagneten **16** ausgebildet. Analog zum Kaltleiter 11 ist auch der Schwimmschalter 12 am Rohrende eines Sondenrohres **17** vorgesehen, das im eingebauten Zustand von oben vertikal in den Behälter hineinragt. Ist der Schwimmer 13 und damit auch der Ringmagnet 16 in seiner unteren Position, also nicht in Heizöl eingetaucht, ist der Reedkontaktschalter geschlossen. Ist der Schwimmer 13 und damit auch der Ringmagnet 16 in seiner aufgeschwommenen oberen Position, also in Heizöl eingetaucht, ist der Reedkontaktschalter geöffnet. Das Sondenrohr 17 wird mittels eines Befestigungsstutzens **18** in einer Öffnung des Behälters 2b-2d befestigt. Das Sondenrohr 17 ist im Befestigungsstutzen 18 verschiebbar geführt und wird mittels einer Madenschraube **19** in der gewünschten Einbauhöhe des Schwimmschalters 12 festgestellt.

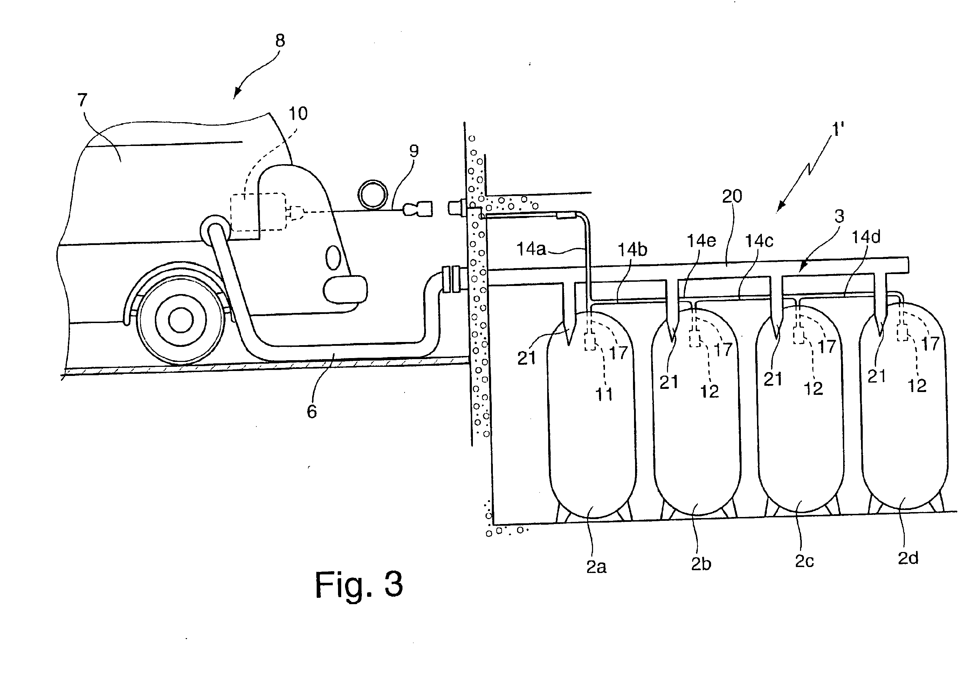

Von der Überfüllsicherungsvorrichtung 1 der Fig. 1 unterscheidet sich die in **Fig. 3** gezeigte Überfüllsicherungsvorrichtung **1**' lediglich dadurch, dass hier die Behälter 2a-2d nicht über Verbindungsleitungen 5 kommunizierend verbunden sind und dass alle Behälter 2a-2d parallel über eine zentrale Befüllungsleitung **20** befüllt werden. Diese zentrale Befüllungsleitung 20 verläuft oberhalb der einzelnen Behälter 2a-2d und ist mit den Behältern 2a-2d über identische Drosseln (z.B. Düsen) **21** verbunden, die jeweils in die Behälter 2a-2d hineinragen. Beim Befüllen steht das Heizöl in der zentralen Befüllungsleitung 20 mit Druck an und wird über die Drosseln 21 idealerweise gleichmäßig auf die einzelnen Behälter 2a-2d verteilt. Da die Drosselwiderstände der Drosseln 21 aufgrund von Verschmutzungen oder aus anderen Gründen im Betrieb unterschiedlich sein können, kann auch die Befüllung der einzelnen Behälter 2a-2d unterschiedlich erfolgen. Überschreitet beim Befüllen der Heizölpegel sein Maximum im ersten Behälter 2a, wird der Befüllvorgang wie oben beschrieben durch den abgekühlten Kaltleiter 11 beendet. Überschreitet beim Befüllen der Heizölpegel sein Maximum in einem der weiteren Behälter 2b-2d, unterbricht der zugehörige Schwimmerschalter 12 aufgrund der seriellen Verschaltung die elektrische Verbindung zwischen Kaltleiter 11 und Befüllungssteuerung 10, und der Befüllvorgang wird ebenfalls wie oben beschrieben beendet. Durch die Seriellschaltung funktioniert dieses Prinzip mit beliebig vielen Behältern.

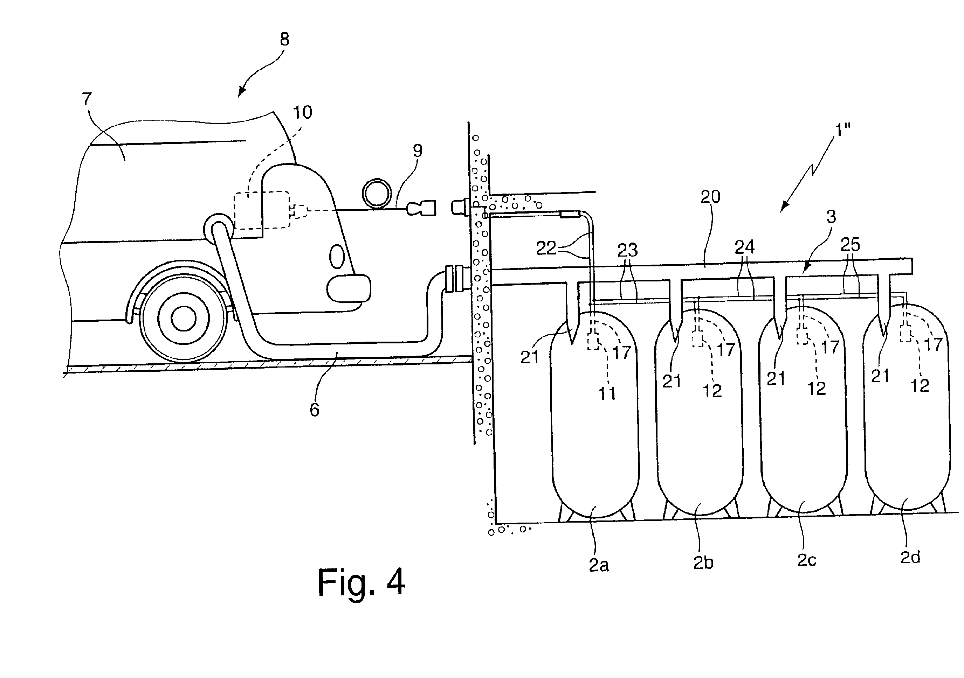

Von der Überfüllsicherungsvorrichtung 1' der Fig. 3 unterscheidet sich die in **Fig. 4** gezeigte Überfüllsicherungsvorrichtung **1**" lediglich dadurch, dass hier die Schwimmschalter 12 parallel zum Kaltleiter 11 des ersten Behälters 2a elektrisch verschaltet sind, wie durch die elektrischen Doppelleitungen **22-25** gezeigt ist, und dass jeder Schwimmschalter 12 in der unteren Ausgangsposition seines Schwimmers 13 geöffnet und in einer aufgeschwommenen oberen Position seines Schwimmers 13 geschlossen ist. Der Schwimmschalter 12 kann wie in Fig. 2 gezeigt als Reedkontaktschalter ausgebildet sein, der jedoch in der unteren Position des Schwimmers 13 bzw. des Ringmagnets 16 geöffnet und in einer aufgeschwommenen oberen Position des Schwimmers 13 geschlossen ist. Beim Befüllen steht das Heizöl in der zentralen Befüllungsleitung 20 mit Druck an und wird über die Drosseln 21 idealerweise gleichmäßig auf die einzelnen Behälter 2a-2d verteilt. Da die Drosselwiderstände der Drosseln 21 aufgrund von Verschmutzungen oder aus anderen Gründen im Betrieb unterschiedlich sein können, kann auch die Befüllung der einzelnen Behälter 2a-2d unterschiedlich erfolgen. Überschreitet beim Befüllen der Heizölpegel sein Maximum im ersten Behälter 2a, wird der Befüllvorgang wie oben beschrieben durch den abgekühlten Kaltleiter 11 beendet. Überschreitet beim Befüllen der Heizölpegel sein Maximum in einem der weiteren Behälter 2b-2d, schließt der zugehörige Schwimmerschalter 12, was zu einem Kurzschluss der am Kaltleiter 11 anliegenden elektrischen Spannung der Befüllungssteuerung 10 führt. Dieser Kurzschluss wird von der Befüllungssteuerung 10 als Fehler erkannt, und der Befüllvorgang wird ebenfalls wie oben beschrieben beendet. Durch die Parallelschaltung funktioniert dieses Prinzip mit beliebig vielen Behältern.

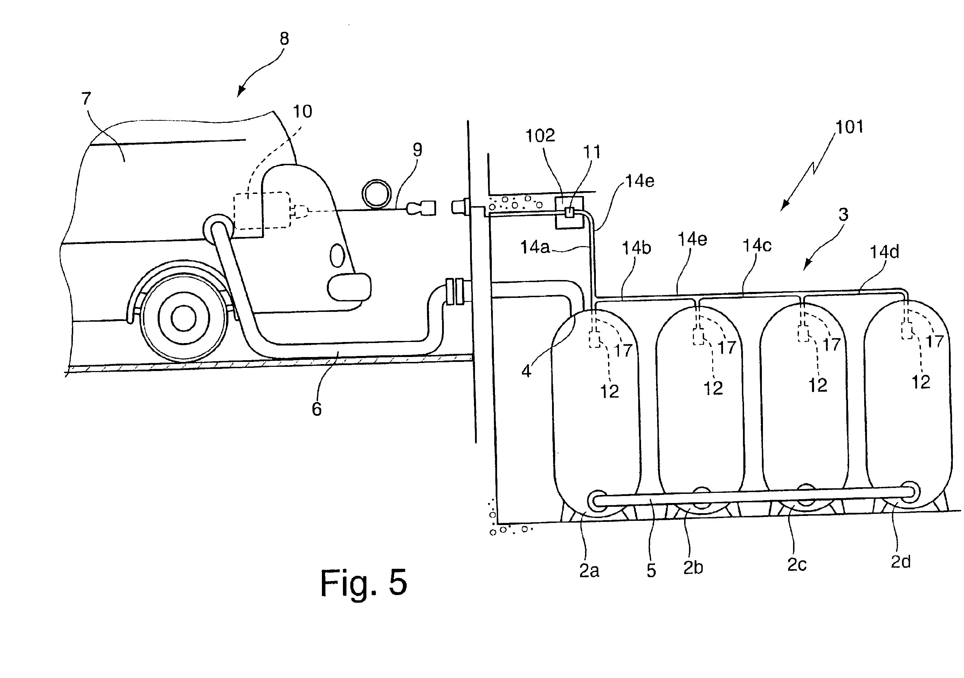

Figur 5 zeigt eine weitere Überfüllsicherungsvorrichtung die nicht Gegenstand der vorliegenden Erfindung ist. Von der Überfüllsicherungsvorrichtung 1 der Fig. 1 unterscheidet sich die in **Fig. 5** gezeigte Überfüllsicherungsvorrichtung **101** lediglich dadurch, dass hier auch im ersten Behälter 2a ein elektrischer Schwimmschalter 12 auf der zulässigen Füllstandshöhe vorgesehen ist und dass der Kaltleiter 11 in einem Schaltkasten **102** außerhalb des ersten Behälters 2a angeordnet ist. Alternativ kann der Kaltleiter 11 auch im ersten Behälter 2a oberhalb des dort vorgesehenen Schwimmschalters 12 angeordnet sein. Überschreitet beim Befüllen der Heizölpegel sein Maximum im ersten Behälter 2a, wird der Befüllvorgang durch den im ersten Behälter 2a vorgesehenen Schwimmerschalter 12 beendet, der aufgrund seiner seriellen Verschaltung die elektrische Verbindung zwischen Kaltleiter 11 und Befüllungssteuerung 10 unterbricht. Der Kaltleiter 11 dient also nicht zur Füllstandsmessung, sondern ist vorgesehen, um dem Schaltverstärker 10 des Lkws 7 die weiterhin geforderte Kaltleiter-Charakteristik bereitzustellen. Analog wird im Fall von parallel zum Kaltleiter 12 verschalteten Schwimmerschaltern 12, wenn beim Befüllen der Heizölpegel sein Maximum im ersten Behälter 2a überschreitet, der Befüllvorgang durch den im ersten Behälter 2a vorgesehenen Schwimmerschalter 12 beendet, der aufgrund seiner parallelen Verschaltung die elektrische Verbindung zwischen Kaltleiter 11 und Befüllungssteuerung 10 kurzschließt.

Obwohl die Überwachungsvorrichtung 101 in Fig. 5 zur Überwachung von mehreren Behältern 2a-2d einer Behälterbatterie 3 eingesetzt ist, kann sie auch zur Überwachung nur eines einzigen Behälters, nämlich des Behälters 2a in Fig. 5, eingesetzt werden, dessen Schwimmschalter 12 mit dem Kaltleiter 11 seriell oder parallel verschaltet ist.

## Patentansprüche

1. Uberfüllsicherungsvorrichtung (1; 1'_{;} 1"; 101) für
Flüssigkeitsbehälterbatterien (3), insbesondere Tankbatterien für Heizöl, aus mehreren Behältern (2a-2d), die parallel an eine zentrale Befüllungsleitung (20) angeschlossen sind, welche jeweils über eine Drossel (21) mit den Behältern (2a-2d) verbunden ist,
mit einem einzigen Kaltleiter (11) als elektrischem Grenzwertgeber für eine Befüllungssteuerung (10), die das Befüllen der mehreren Behälter (2a-2d) über die zentrale Befüllungsleitung (20) steuert,
wobei in einem ersten Behälter (2a) auf einer zulässigen Füllstandshöhe entweder der Kaltleiter (11) oder ein elektrischer Schwimmschalter (12) vorgesehen ist,
wobei in jedem weiteren Behälter (2b-2d) auf einer zulässigen Füllstandshöhe ein elektrischer Schwimmschalter (12) vorgesehen ist, und wobei die Schwimmschalter (12) mit dem Kaltleiter (11) seriell oder parallel verschaltet sind.

2. Überfüllsicherungsvorrichtung nach Anspruch 1, **dadurch gekennzeichnet, dass** jeder Schwimmschalter (12) bei serieller Verschaltung in der unteren Ausgangsposition seines Schwimmers (13) geschlossen und in einer aufgeschwommenen oberen Position seines Schwimmers (12) geöffnet ist und bei paralleler Verschaltung in der unteren Ausgangsposition seines Schwimmers (13) geöffnet und in einer aufgeschwommenen oberen Position seines Schwimmers (12) geschlossen ist.

3. Überfüllsicherungsvorrichtung nach Anspruch 1 oder 2, **dadurch gekennzeichnet, dass** bei im ersten Behälter (2a) vorhandenem Schwimmschalter (12) der Kaltleiter (11) außerhalb des ersten Behälters (2a) angeordnet ist.

4. Überfüllsicherungsvorrichtung nach Anspruch 1 oder 2, **dadurch gekennzeichnet, dass** bei im ersten Behälter (2a) vorhandenem Schwimmschalter (12) der Kaltleiter (11) im ersten Behälter (2a) oberhalb des Schwimmschalters (12) angeordnet ist.

5. Überfüllsicherungsvorrichtung nach nach einem der vorhergehenden Ansprüche, **dadurch gekennzeichnet, dass** die zentrale Befüllungsleitung (20) oberhalb der Behälter (2a-2d) verläuft.

6. Überfüllsicherungsvorrichtung nach einem der vorhergehenden Ansprüche, **dadurch gekennzeichnet, dass** alle Schwimmschalter (12) und im Falle des im ersten Behälter (2a) auf der zulässigen Füllstandshöhe angeordneten Kaltleiters (11) auch der Kaltleiter (11) auf der gleichen zulässigen Füllstandshöhe vorgesehen sind.

7. Überfüllsicherungsvorrichtung nach einem der vorhergehenden Ansprüche, **dadurch gekennzeichnet, dass** der Schwimmschalter (12) als Reedkontaktschalter ausgebildet ist und der Schwimmer (13) einen mit dem Reedkontakt zusammenwirkenden Magneten (16) aufweist.

8. Überfüllsicherungsvorrichtung nach einem der vorhergehenden Ansprüche, **dadurch gekennzeichnet, dass** der Schwimmschalter (12) im Behälter (2a-2d) höhenverstellbar befestigt ist.

9. Überfüllsicherungsvorrichtung nach einem der vorhergehenden Ansprüche, **dadurch gekennzeichnet, dass** der Schwimmschalter (12) und im Falle des im ersten Behälter (2a) auf der zulässigen Füllstandshöhe angeordneten Kaltleiters (11) auch der Kaltleiter (11) an einem von oben in den Behälter (2a-2d) ragenden Sondenrohr (17) vorgesehen ist.

10. Überfüllsicherungsvorrichtung nach Anspruch 9, **dadurch gekennzeichnet, dass** das in den Behälter (2a-2d) ragende Sondenrohr (17) höhenverstellbar am Behälter (2a-2d) befestigt ist.

## Claims

1. Overfill protection device (1; 1'; 1"; 101) for liquid container batteries (3), in particular tank batteries for heating oil, consisting of a plurality of containers (2a-2d) which are connected in parallel to a central supply line (20), which is connected to each container (2a-2d) via one throttle valve (21),
comprising one single PTC thermistor (11) as electric limit indicator for a filling control system (10) which controls filling of the plurality of containers (2a-2d) via the central supply line (20),
wherein either the PTC thermistor (11) or an electric float switch (12) is provided at an admissible filling level in a first container (2a),
wherein an electric float switch (12) is provided at an admissible filling level in each further container (2b-2d), and wherein the float switches (12) are connected in series or in parallel with the PTC thermistor (11).

2. Overfill protection device according to claim 1, **characterized in that** in case of serial connection, each float switch (12) is closed in the lower starting position of its float (13), and is open in a floated upper position of its float (13), and in case of parallel connection is open in the lower starting position of its float (13) and is closed in a floated upper position of its float (13).

3. Overfill protection device according to claim 1 or 2, **characterized in that** when the float switch (12) is arranged in the first container (2a), the PTC thermistor (11) is provided outside of the first container (2a).

4. Overfill protection device according to claim 1 or 2, **characterized in that** when the float switch (12) is provided in the first container (2a), the PTC thermistor (11) is arranged in the first container (2a) above the float switch (12).

5. Overfill protection device according to any one of the preceding claims, **characterized in that** the central supply line (20) extends above the containers (2a-2d).

6. Overfill protection device according to any one of the preceding claims, **characterized in that** all float switches (12) and, if the PTC thermistor (11) is arranged at the admissible filling level in the first container (2a), also the PTC thermistor (11) are provided at the same admissible filling level.

7. Overfill protection device according to any one of the preceding claims, **characterized in that** the float switch (12) is designed as a reed contact switch and the float (13) comprises a magnet (16) which cooperates with the reed contact.

8. Overfill protection device according to any one of the preceding claims, **characterized in that** the float switch (12) is mounted in the container (2a-2d) such that it can be adjusted in height.

9. Overfill protection device according to any one of the preceding claims, **characterized in that** the float switch (12) and, if the PTC thermistor (11) is arranged at the admissible filling level in the first container (2a), also the PTC thermistor (11) are provided on a probe tube (17) that projects from the top into the container (2a-2d).

10. Overfill protection device according to claim 9, **characterized in that** the probe tube (17) that projects into the container (2a-2d) is mounted to the container (2a-2d) such that it can be adjusted in height.

## Revendications

1. Dispositif (1 ; l' ; 1" ; 101) de sécurité de trop-plein pour des batteries (3) de récipients de liquide, en particulier des batteries de réservoirs de fioul, constituées de plusieurs récipients (2a-2d) qui sont raccordés en parallèle à une conduite centrale de remplissage (20) qui est reliée aux récipients (2a-2d) par l'intermédiaire d'un étranglement respectif (21),
avec une unique résistance CTP (11) (résistance à coefficient de température positif) comme transmetteur électrique de valeur limite pour une unité de commande de remplissage (10) qui commande le remplissage des récipients (2a-2d) via la conduite centrale de remplissage (20),
sachant que soit la résistance CTP (11), soit un commutateur électrique à flotteur (12) est prévu dans un premier récipient (2a) à une hauteur de remplissage admissible,
sachant qu'un commutateur électrique à flotteur (12) est prévu dans chaque récipient supplémentaire (2b-2d) à une hauteur de remplissage admissible, et sachant que les commutateurs à flotteur (12) sont branchés en série ou en parallèle avec la résistance CTP (11).

2. Dispositif de sécurité de trop-plein selon la revendication 1, **caractérisé en ce que** chaque commutateur à flotteur (12), en cas de branchement en série, est fermé dans la position initiale inférieure de son flotteur (13) et ouvert dans une position supérieure, de flottaison, de son flotteur (13), et, en cas de branchement en parallèle, est ouvert dans la position initiale inférieure de son flotteur (13) et fermé dans une position supérieure, de flottaison, de son flotteur (13).

3. Dispositif de sécurité de trop-plein selon la revendication 1 ou 2, **caractérisé en ce que**, en présence d'un commutateur à flotteur (12) dans le premier récipient (2a), la résistance CTP (11) est disposée à l'extérieur du premier récipient (2a).

4. Dispositif de sécurité de trop-plein selon la revendication 1 ou 2, **caractérisé en ce que**, en présence d'un commutateur à flotteur (12) dans le premier récipient (2a), la résistance CTP (11) est disposée dans le premier récipient (2a) au-dessus du commutateur à flotteur (12).

5. Dispositif de sécurité de trop-plein selon l'une des revendications précédentes, **caractérisé en ce que** la conduite centrale de remplissage (20) s'étend au-dessus des récipients (2a-2d).

6. Dispositif de sécurité de trop-plein selon l'une des revendications précédentes, **caractérisé en ce que** tous les commutateurs à flotteur (12) et, dans le cas où la résistance CTP (11) est disposée dans le premier récipient (2a) à la hauteur de remplissage admissible, également la résistance CTP (11) sont prévus à la même hauteur de remplissage admissible.

7. Dispositif de sécurité de trop-plein selon l'une des revendications précédentes, **caractérisé en ce que** le commutateur à flotteur (12) est réalisé sous forme de commutateur à contact à lames souples, et le flotteur (13) présente un aimant (16) coopérant avec le contact à lames souples.

8. Dispositif de sécurité de trop-plein selon l'une des revendications précédentes, **caractérisé en ce que** le commutateur à flotteur (12) est fixé avec possibilité de réglage en hauteur dans le récipient (2a-2d).

9. Dispositif de sécurité de trop-plein selon l'une des revendications précédentes, **caractérisé en ce que** le commutateur à flotteur (12) et, dans le cas où la résistance CTP (11) est disposée dans le premier récipient (2a) à la hauteur de remplissage admissible, également la résistance CTP (11) sont prévus sur un tube de sonde (17) s'enfonçant par le haut dans le récipient (2a-2d).

10. Dispositif de sécurité de trop-plein selon la revendication 9, **caractérisé en ce que** le tube de sonde (17) s'enfonçant dans le récipient (2a-2d) est fixé au récipient (2a-2d) avec possibilité de réglage en hauteur.
